Europäisches Patentamt

European Patent Office

Office européen des brevets

(19)

(11) Publication number: **0 041 339**
**B1**

# EUROPEAN PATENT SPECIFICATION

(12)

(45) Date of publication of patent specification: **08.08.84**

(21) Application number: **81302241.5**

(22) Date of filing: **20.05.81**

(51) Int. Cl.³: **H 01 J 29/20, H 01 J 5/04,
C 03 C 3/30**

(54) **Color cathode ray tube.**

(30) Priority: **29.05.80 JP 72382/80
28.08.80 JP 119983/80**

(43) Date of publication of application:
**09.12.81 Bulletin 81/49**

(45) Publication of the grant of the patent:
**08.08.84 Bulletin 84/32**

(84) Designated Contracting States:
**DE FR GB**

(56) References cited:
**US - A - 3 143 683
US - A - 3 418 246
US - A - 3 547 675
US - A - 3 654 505
US - A - 3 950 668
US - A - 4 065 696
US - A - 4 172 920**

(73) Proprietor: **MITSUBISHI DENKI KABUSHIKI
KAISHA
2-3, Marunouchi 2-chome Chiyoda-ku
Tokyo 100 (JP)**

(72) Inventor: **Kobayashi, Hiroo
1520-27 Minamigasacho
Kusatsu-shi Shiga-ken (JP)**

(74) Representative: **Wright, Peter David John et al,
R.G.C. Jenkins & Co. 12-15, Fetter Lane
London EC4A 1PL (GB)**

Courier Press, Leamington Spa, England.

## Description

The present invention relates to a color cathode ray tube for a color display for TV, industrial use or other specialised uses.

The face glasses of these color cathode ray tubes are classified by ranks of light transmission, into a clear face having visible light transmission of at least 75%, a grey face having visible light transmission of 60 to 75% and a tint face having visible light transmission of up to 60%. In the color cathode ray tubes, grey faces or clear faces having high light transmission have been most commonly used, to achieve the required brightness. A tint glass having lower light transmission is suitable for absorbing external light to improve contrast. In general, the output from a fluorescent screen of a color ray tube is not high enough to give the desired light when the light transmission is low. Therefore, the clear or grey glass has been most commonly used. In order to attain high brightness and high contrast, various improvements have been studied. One such improvement is a black matrix and recently a pigment phosphor has been used.

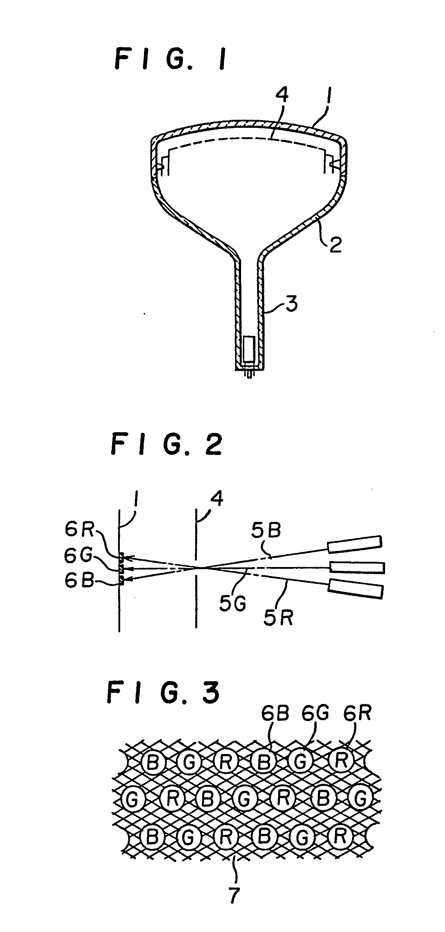

For example, referring to Fig. 1 of the accompanying drawings, a shadow mask type color receiver comprises a face glass (1) on an inner surface of which a phosphor is coated; a funnel (2) connected to the face glass with a glass frit; a neck part in which an electron gun is held, and a shadow mask (4) placed near the fluorescent screen inside the vacuum envelope.

Referring to Figs. 2 and 3, the shadow mask (4) functions as a color selecting electrode so as to project electron beams (5B), (5G), (5R) which pass with specific angles to the holes of the shadow mask (4) so as to correspond to phosphor dots (6B), (6G), (6R) for luminous colors formed on the screen to which the electron beams are reached.

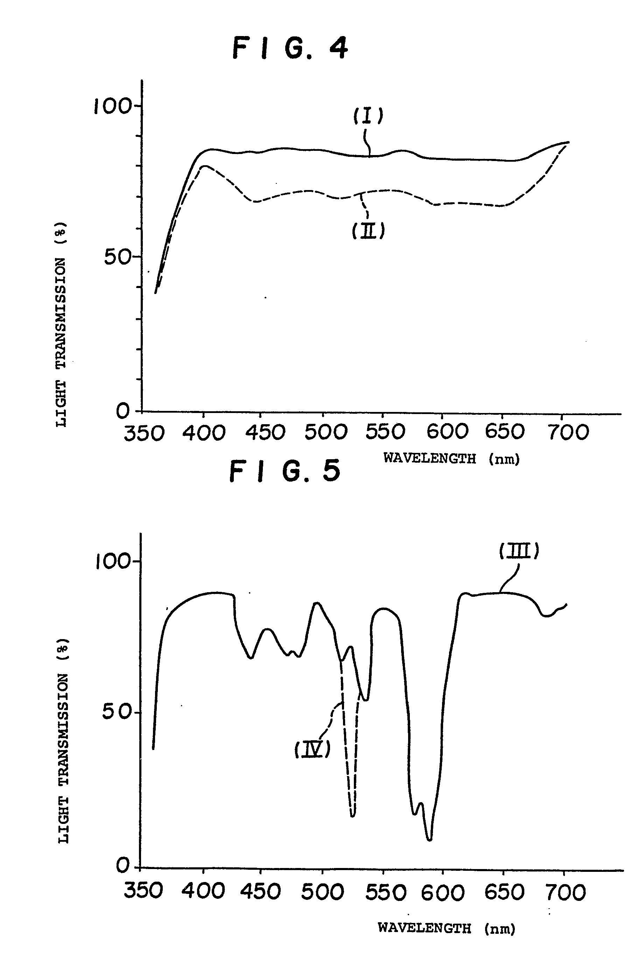

The grey glass having a light transmission spectrum shown by the curve (II) in Figure 4 has been most commonly used for the face glass part (1) of a color cathode ray tube having such structure. The most common type of face glass used for such tubes is a black matrix type face glass prepared by filling spaces between the phosphor dots (6B), (6G), (6R) of blue green and red, with a black paint as a light absorption material (7) as shown in Figure 3. The most common clear glass used for the face glass is one having high light transmission as shown in the curve (I) in Figure 4. The transmittance through the face plate of light emitted from the phosphors is maximised by using the clear glass. On the other hand, the black matrix layer is formed to absorb external light and light reflected from the face glass surface back onto the fluorescent screen thereby improving contrast.

Recently, it has been proposed to use pigment phosphors prepared by incorporating a pigment in each phosphor so as to increase selectively the percentage reflectivity for the emitted color of each phosphor, thereby further improving the contrast. The characteristics have been improved by these proposals, but the improvement obtained is not sufficiently consistent to satisfy the commercial requirements for higher brightness and higher contrast. When the tube is used for a terminal display of a computer, figures, symbols or graphs are displaced on parts of the screen in many cases, so that the ratio of the luminous area to the total effective screen area is only up to 10% in many operations. It is an important problem to improve the contrast without adversely affecting brightness.

It is an object of the present invention to impart to the face glass the desired wavelength selectivity for transmission so as to give the maximum light transmission to the emission energy of the phosphor and to reduce light transmission in wavelength regions having no emission spectrum of the phosphor, to increase the contrast.

The present invention provides a color cathode ray tube comprising a fluorescent screen having one or more phosphors on an inner surface of a face glass for plural emission colors, characterized in that it includes $Cr_2O_3$ in an amount less than 100 ppm and $Nd_2O_3$ in an amount ranging from 0.3 to 1.5 wt.% of the face glass composition, the face glass having a thickness of approximately 1 cm.

Preferred embodiments of the invention will be described with reference to the accompanying drawings wherein:

Figure 1 is a sectional schematic view of a shadow mask type color cathode ray tube;

Figure 2 shows the position of phosphor dots relative to the shadow mask and electron beams;

Figure 3 shows a black matrix fluorescent screen;

Figure 4 is a graph showing spectral transmittance characteristic of a face glass for a conventional cathode ray tube;

Figure 5 is a graph showing spectral transmittance characteristics of a face glass for a color cathode ray tube according to the present invention;

Figure 6 shows the emission spectra of individual phosphors;

Figure 7 is a graph showing spectral transmittance characteristic of another embodiment of a face glass for a color cathode ray tube according to the present invention.

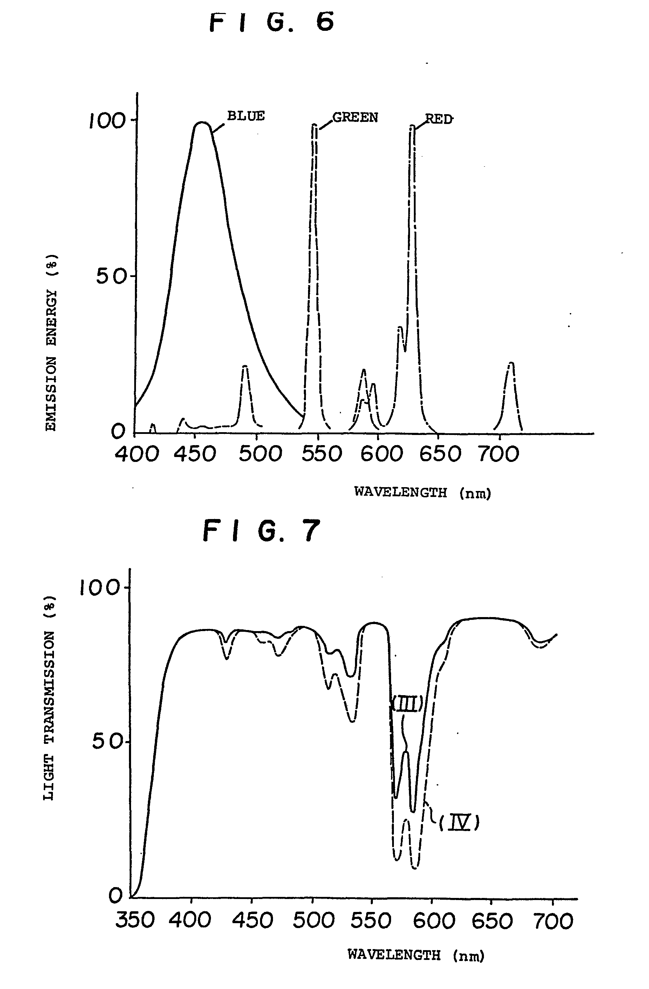

The Inventors have found that the face glass of the conventional cathode ray tube has a flat spectral transmission pattern in the visible wavelength region. In the old color cathode ray tube the phosphors have relatively broad emission spectra for each of phosphors in blue, green and red. The phosphors, however, have been remarkably improved so that phosphors having substantially linear spectral emission characteristics as shown in Figure 6, such as

$Gd_2O_2S$:Tb in green and $Y_2O_2S$:Eu in red are now available. When the emission spectrum of the phosphor is linear, it is unnecessary for the face glass to have a flat spectral transmission pattern over the whole visible wavelength region, and it is preferable to use a face glass having selective wavelength absorption characteristics.

In accordance with the present invention, the face glass having the optimum spectral transmission characteristics for the requirements of the tube is made from a glass containing a rare earth $Nd_2O_3$ (neodymium oxide), which has light absorption characteristic in the wavelength regions of 470 to 480 nm; 510 to 530 nm and about 570 to 585 nm, together with a minor amount of $Cr_2O_3$. Further components such as praseodynium oxide $Pr_2O_3$ may be included.

A face glass having the spectral transmission shown by the curve (III) in Figure 5 is obtained by using the glass incorporating the neodymium oxide. As can be clearly seen from Figure 5, it has a light transmission of at least 75% in the blue region, about 85% in the green region and about 90% in the red region. The transmission characteristics of emission energies of the phosphors are similar to those of the face glass using clear glass and have large absorption bands in the wavelength region of 510 to 535 nm and 570 to 585 nm for the absorption of external light whereby remarkably improved catalyst can be obtained compared with that obtainable with grey glass. Moreover, when $Er_2O_3$ (erbium oxide), exhibiting local absorption about 520 nm, is incorporated, glass having the light transmission characteristics shown by the curve (IV) in Figure 5 can be prepared whereby the contrast can be further improved without reducing the light transmission.

The use of the phosphors having the linear spectral emission characteristics and the face glass having wavelength selectivity can be combined with the conventional black matrix technology and pigment-phosphor technology. An ideal color cathode ray tube having excellent contrast characteristic can be obtained by a suitable combination of these features. The combination of the face glass of the invention with the pigment-phosphors especially improves the wavelength selectivity characteristics and a remarkable effect can be achieved by these combinations.

In Figure 7, the spectral transmission of the glass containing 0.5 wt.% of $Nd_2O_3$ is shown by the curve (III) and the spectral transmission of the glass containing 1.0 wt.% of $Nd_2O_3$ is shown by the curve (IV). The spectral transmissions of the glass plates having a thickness of 10.0 mm are respectively measured. This thickness is substantially the same as those of conventional face glasses of color cathode ray tubes at the center.

The content of $Nd_2O_3$ in accordance with the invention is in a range of 0.3 to 1.5 wt.% for a face glass having a thickness of approximately 10 mm. When the content of $Nd_2O_3$ is below the specified range, the effect is not enough whereas when it is greater, adverse effects such as inferior glass melting property are found and the cost of the glass is unacceptably increased.

As can be seen in Figure 7, the glass has a broad absorption band in the wavelength region of 570 to 580 nm. Therefore, when the face glass is combined with the phosphors having the emission spectrum shown in Figure 6, the contrast can be improved without a deterioration of the output emission for the display.

In the tube of the present invention, the light transmission of the face glass has the correct wavelength selectivity to improve selectively the light transmission of the emission spectral bands of the phosphors and to increase the light absorption in the non-emission spectral bands, whereby the contrast to the outer light is improved without a deterioration of brightness. Therefore, a color cathode ray tube giving a clear color display with excellent contrast, even with high brightness, can be obtained.

A color cathode ray tube having three phosphors in blue, green and red has been illustrated. The same effects can however be achieved in a cathode ray tube having a combination of phosphors in green and red and white in which the white phosphor is obtained by mixing phosphors in blue, green and red at desired ratios or a beam penetration type cathode ray tube obtained by mixing phosphors in green and red or forming multi-layers of phosphors.

A glass containing $Nd_2O_3$ has slight bluish violet tint. This can be controlled by adding a small amount, less than 100 ppm, of $Cr_2O_3$.

## Claims

1. A color cathode ray tube comprising a fluorescent screen having one or more phosphors on an inner surface of a face glass for plural color emission, characterized in that it includes $Cr_2O_3$ in an amount less than 100 ppm and $Nd_2O_3$ in an amount ranging from 0.3 to 1.5 wt.% of the face glass composition, the face glass having a thickness of approximately 1 cm.

2. A color cathode ray tube according to Claim 1 wherein said phosphor is a pigment phosphor.

3. A color cathode ray tube according to Claim 1 or Claim 2 wherein said fluorescent screen is formed by mixing phosphors to give plural color emission.

4. A color cathode ray tube according to Claim 1 wherein said phosphors include $Gd_2O_3$S:Tb or $Y_2SiO_5$:Tb as a green phosphor having a main linear emission wavelength in the region of 540 to 550 nm.

5. A cathode ray tube according to Claim 1 wherein said phosphors include green and red phosphors having substantially linear spectral emission characteristics.

## Revendications

1. Tube à rayons cathodiques en couleurs comprenant un écran fluorescent qui comporte, sur une surface intérieure d'un verre facial, une ou plusieurs substances luminescentes pour une émission de plusieurs couleurs, caractérisé en ce qu'il comprend du $Cr_2O_3$ dans une proportion inférieure à 100 ppm et du $Nd_2O_3$ dans une proportion allant de 0,3 à 1,5% en poids de la composition du verre facial, le verre facial ayant une épaisseur d'environ 1 cm.

2. Tube à rayons cathodiques en couleurs selon la revendication 1, dans lequel ladite substance luminescente est une substance luminescente pigmentée.

3. Tube à rayons cathodiques en couleurs selon la revendication 1 ou la revendication 2, dans lequel ledit écran fluorescent est réalisé par un mélange de substance luminescentes pour obtenir une émission de plusieurs couleurs.

4. Tube à rayons cathodiques en couleurs selon la revendication 1, dans lequel les substances luminescentes comprennent $Gd_2O_3S:TB$ ou $Y_2SiO_5:Tb$ comme substance luminescente verte présentant une longueur d'ondes principale d'émission linéaire dans le domaine allant de 540 à 550 nm.

5. Tube à rayons cathodiques selon la revendication 1, dans lequel les substances luminescentes comprennent des substances luminescentes verte et rouge dotées de caractéristiques d'émission spectrale sensiblement linéaires.

## Patentansprüche

1. Farbfernsehröhre mit einem Leuchtschirm, der einen oder mehrere Leuchtstoffe aufweist, die auf der inneren Oberfläche der stirnseitigen Glasplatte zur Mehrfarben-Emission ausgebildet sind, dadurch gekennzeichnet, daß die Zusammensetzung der Glasplatte $Cr_2O_3$ in einer Menge von weniger als 0,01 Gewichtsprozent (100 ppm) und $Nd_2O_3$ in einer Menge zwischen 0,3 bis 1,5 Gewichtsprozent aufweist und daß die Glasplatte eine Dicke von etwa 1 cm hat.

2. Farbfernsehröhre nach Anspruch 1, dadurch gekennzeichnet, daß der Leuchtstoff ein Pigmentleuchtstoff ist.

3. Farbfernsehröhre nach Anspruch 1 oder 2, dadurch gekennzeichnet, daß der Leuchtschirm durch Mischen von Leuchtstoffen zur Erzielung der Mehrfarben-Emission gebildet ist.

4. Farbfernsehröhre nach Anspruch 1, dadurch gekennzeichnet, daß die Leuchtstoffe $Gd_2O_3S: Tb$ oder $Y_2SiO_5: Tb$ als grüner Leuchtstoff mit einer linearen Hauptemissions-Wellenlänge im Bereich von 540 bis 550 nm umfassen.

5. Farbfernsehröhre nach Anspruch 1, dadurch gekennzeichnet, daß die Leuchtstoffe grüne und rote Leuchtstoffe umfassen, die im wesentlichen lineare Spektral-Emissionseigenschaften aufweisen.

# F I G. I

# F I G. 2

# F I G. 3

# F I G. 4

LIGHT TRANSMISSION (%) vs WAVELENGTH (nm)

(I)
(II)

# F I G. 5

LIGHT TRANSMISSION (%) vs WAVELENGTH (nm)

(III)
(IV)

2

## F I G. 6

## F I G. 7